# DEMANDE DE BREVET EUROPEEN

(11) **EP 0 955 356 A1**
(43) Date de publication de la demande: **10.11.1999**
(21) Numéro de dépôt: 99430006.9
(22) Date de dépôt: 30.04.1999
(51) Int. Cl.: C11D 17/00, C11D 3/18, C11D 3/22, C11D 3/12, C11D 9/00, A01N 25/08

(54) **Composition support d'un agent actif à libérer progressivement**

(30) Priorité: 30.04.1998 FR 9805593
(71) Demandeur: Aitik, 83110 Sanary sur Mer (FR)
(72) Inventeur: Clement, Paul, 83110 Sanary sur Mer (FR)
(74) Mandataire: Marchand, André

(57) **Abrégé**

L'invention concerne une composition support d'au moins un agent actif à libérer progressivement en présence d'eau, comprenant au moins une paraffine ou une cire, ou un mélange paraffine/cire, et au moins un constituant soluble dans l'eau à une température choisie en fonction des conditions prévues d'utilisation de la composition et de la durée de rétention souhaitée de l'agent actif. Dans la composition selon l'invention, la paraffine et/ou la cire forment des alvéoles dans lesquelles se trouve le constituant soluble. Application notamment à l'entretien des canalisations domestiques.

## Description

La présente invention se rapporte à une composition support d'au moins un agent actif à libérer progressivement en présence d'eau, applicable notamment à l'entretien des canalisations et des réservoirs d'eau.

Dans le domaine agricole, il est déjà connu d'utiliser des compositions servant de support ou de protection à au moins un principe actif comprenant essentiellement un engrais. Une fois placées dans la terre, ces compositions libèrent progressivement le principe actif sur une période de temps déterminée.

Les compositions servant de support sont essentiellement constituées de bentonite et de farine végétale et/ou de P.V.A. (alcool polyvinylique), et se présentent généralement sous forme de bâtonnets incorporés dans la terre. La cinétique de libération des principes actifs est fonction du choix des composants du support et de leurs proportions respectives.

D'autre part, les compositions servant de protection libèrent les principes actifs qu'elles contiennent par phénomène d'osmose ou par solubilisation dans un solvant présent dans le milieu où les principes actifs doivent être libérés. Les compositions "de protection" connues se présentent généralement sous forme de granules ou de gélules. La cinétique de libération des éléments actifs est fonction de la composition relative du milieu et de la protection.

Un autre moyen connu de libération d'agents actifs, basé sur le phénomène de biodégradabilité, consiste à libérer par hydrolyse les agents actifs présents sur une molécule organique servant de support. La libération peut être ou non associée à l'action de micro-organismes. Les compositions basées sur la biodégradabilité d'un support se présentent généralement sous forme de poudre, de comprimés ou de granulés. La cinétique de libération est alors fonction de la longueur de la chaîne de la molécule organique.

On connaît par ailleurs d'autres compositions utilisées comme support à libération progressive d'au moins un principe actif, destinées à l'entretien des canalisations d'eau et/ou de réservoirs d'eaux ménagères usées, notamment. Ces compositions support se présentent le plus souvent sous forme de liquide ou de poudre, comprimée ou non. De telles compositions présentent l'inconvénient de ne pas rester suffisamment longtemps en place dans les zones où l'eau est en mouvement, notamment dans les canalisations et les siphons. Ces compositions restent donc réservées aux zones à stagnation d'eau, par exemple aux fosses septiques.

Enfin, on connaît également des supports en matière plastique libérant progressivement des principes actifs désinfectants et/ou nettoyants, utilisés notamment dans les cuvettes ou les chasses d'eau des cabinets d'aisance. Ces supports ont un coût de revient élevé, sont peu pratiques à l'emploi et nécessitent un moyen de fixation qui s'avère souvent inefficace. De plus, ils participent à la pollution de l'environnement en ce qu'ils ne sont pas recyclables.

Ainsi, un objectif de la présente invention est de prévoir une composition autoporteuse qui puisse se maintenir d'elle-même dans des zones où les eaux ne sont pas stagnantes, qui soit non polluante pour l'environnement, qui puisse être utilisée comme support à libération progressive et régulière en présence d'eau d'au moins un agent actif, dans une large gamme de températures de l'eau, et qui ne nécessite pas la prévision d'un support supplémentaire, notamment un support en matière plastique.

Cet objectif est atteint par la prévision d'une composition support d'au moins un agent actif à libérer progressivement en présence d'eau, comprenant au moins une paraffine, ou une cire, ou un mélange paraffine/cire, et au moins un constituant soluble dans l'eau à une température choisie en fonction des conditions prévues d'utilisation de la composition et de la durée de rétention souhaitée de l'agent actif, la paraffine et/ou la cire formant des alvéoles dans lesquelles se trouve le constituant soluble.

Selon un mode de réalisation avantageux, la composition comprend en outre au moins un élément se dilatant et/ou gonflant en présence d'eau.

L'élément dilatant et/ou gonflant est par exemple choisi parmi l'argile, les fibres de cellulose, et leurs mélanges.

Selon un mode de réalisation, l'élément dilatant et/ou gonflant comprend une argile choisie parmi la bentonite, le kaolin, ou un mélange de ces deux éléments.

Selon un mode de réalisation, l'agent actif est mélangé au constituant soluble.

Selon un mode de réalisation, l'agent actif est formé en tout ou en partie par le constituant soluble.

Selon un mode de réalisation, l'agent actif est choisi parmi les produits intervenant dans la bio épuration des eaux, notamment les micro-organismes, enzymes, diastases, et/ou parmi les bactéricides, antifongiques, désinfectants, les parfums, les dégraissants, les colorants et leurs mélanges.

Selon un mode de réalisation, le constituant soluble est choisi parmi les sels d'acides gras, les sels alcalins ou alcalino-terreux d'acides gras saturés, les sels alcalins ou alcalino-terreux d'acides gras insaturés, les chlorures d'alcalin ou d'alcalino-terreux, et leurs mélanges.

Selon un mode de réalisation, l'agent actif est présent en une quantité représentant 10 à 30% du poids total de la composition.

Selon un mode de réalisation, la composition selon l'invention se présente sous la forme d'un bâtonnet.

La présente invention concerne également un procédé de fabrication d'une composition support d'au moins un agent actif à libérer progressivement en présence d'eau, comprenant les étapes consistant à préparer un constituant soluble dans l'eau, comprenant l'agent actif à libérer et/ou formant lui-même l'agent actif, et mélanger avec le constituant soluble au moins une paraffine, ou une cire, ou un mélange cire/paraffine, de manière à former un mélange comportant des alvéoles de paraffine et/ou de cire dans lesquelles se trouve le constituant soluble.

Avantageusement, l'étape de préparation du constituant soluble comprend une étape d'incorporation dans le constituant soluble d'un élément pouvant se dilater et/ou gonfler en présence d'eau.

Ces objets, caractéristique et avantages ainsi que d'autres de la présente invention seront exposés plus en détail dans la description suivante de la matière selon l'invention, de ses propriétés et de divers exemples de réalisation donnés à titre non limitatif.

De façon générale, la composition selon l'invention présente l'avantage d'être sensiblement rigide et de conserver cette rigidité en présence d'eau, stagnante ou courante, tout en se dégradant progressivement en libérant progressivement et régulièrement, par exemple en quelques semaines, au moins un agent actif.

Ces propriétés de la présente invention tiennent d'une part au fait que la paraffine, la cire ou le mélange paraffine/cire forme le squelette de la composition et assure son maintien lorsque la température moyenne de l'eau est inférieure à la température de fusion de la paraffine ou de la cire, par exemple une température de l'ordre de 50°C à 70°C.

D'autre part, la paraffine, la cire ou le mélange paraffine/cire forme un ensemble de "cavernes" et "d'alvéoles" dans lesquelles se trouvent emprisonné le composant soluble. Les cavernes sont définies comme des volumes ouverts vers l'extérieur, et sont présentes à la surface de la composition. Elles libèrent l'agent actif en raison de la solubilisation progressive du constituant soluble au contact de l'eau. Les alvéoles sont définies comme des cavernes fermées, et sont présentes au coeur de la composition. Elles libèrent le constituant soluble et l'agent actif lorsqu'elles se transforment en cavernes, c'est-à-dire lorsque la paraffine et/ou la cire constituant le squelette de la composition support a partiellement fondu au contact d'une eau tiède ou chaude.

Ainsi, selon l'invention, la libération de l'agent actif se fait successivement selon un premier mécanisme lié à la solubilisation du composé présent dans les cavernes, se faisant naturellement au contact de l'eau, suivi d'un second mécanisme lié à la fusion lente de la paraffine et/ou de la cire, transformant des alvéoles en cavernes. Le contact de la composition selon l'invention avec une eau de température supérieure à un seuil déterminé permet le ramollissement de la paraffine, donc sa dégradation, pour la formation progressive de nouvelles cavernes.

Au terme du processus de transformation et de libération progressive de l'agent actif, la matière selon l'invention finit par disparaître entièrement, les résidus éventuels pouvant être évacués par un passage d'eau courante.

En pratique, la composition selon l'invention est susceptible de diverses applications et peut notamment être appliquée à l'entretien, notamment le nettoyage, la désinfection et le détartrage des canalisations d'eaux usées, des siphons, des cuvettes de cabinets d'aisance, des fosses septiques...

Par exemple, la composition selon l'invention peut se présenter sous la forme d'un bâtonnet et être disposée dans le siphon d'un évier pour y demeurer jusqu'à dégradation complète.

Dans ce cas, la durée de vie de la matière selon l'invention sera de quelques semaines à quelques mois, en présence d'un flux d'eau fréquent et régulier à des températures habituelles de l'ordre de 10 à 55°C.

La composition selon l'invention n'est toutefois pas limitée à de telles applications. Elle peut par exemple être utilisée dans le domaine de la géologie pour libérer progressivement un colorant dans une voie d'eau souterraine.

Ainsi, en pratique, l'agent actif peut être un produit ou un mélange de produits intervenant dans la bio épuration des eaux, notamment les micro-organismes, enzymes, diastases, mais peut également être un bactéricide, un antifongique, un désinfectant, un parfum, un dégraissant, un colorant... ou un mélange de ces divers éléments.

De préférence, pour une gamme de températures de l'eau donnée par l'application envisagée, que l'on appellera gamme de températures de travail, la paraffine ou la cire sera choisie pour présenter une température de fusion se situant dans les valeurs hautes de la gamme de températures de travail. Au contraire, le constituant soluble aura de préférence une température optimale de solubilisation (température à partir de laquelle il se dissout aisément) se situant dans les valeurs basses de la gamme de températures. Par exemple, pour une gamme de températures de travail de 10 à 55°C, la paraffine ou la cire pourra présenter une température de fusion de l'ordre de 30 à 45°C et le constituant soluble une température de solubilisation optimale de l'ordre de 20°C.

La composition selon l'invention peut être réalisée à partir d'une paraffine choisie parmi les paraffines de pétrole et leurs mélanges.

Comme alternative, et selon l'application envisagée, la composition selon l'invention peut aussi être réalisée à partir d'une cire, notamment une cire choisie parmi les cires de pétrole ayant une température fusion de l'ordre de 70° à 110°C, les cires de synthèse FISCHER TROPSCH ayant une température fusion de l'ordre de 45° à 120°C, les cires à faible poids moléculaire à base de polyéthylène ayant une température de fusion de l'ordre de 50° à 130°C, et leurs mélanges.

Un mélange cire/paraffine comprenant une cire ayant une température de fusion (par exemple de 65 à 130°C) supérieure à celle de la paraffine (par exemple 50 à 70°C) peut être prévue pour des applications où la température de l'eau varie entre plusieurs extrêmes, afin de relayer la paraffine une fois que celle-ci a disparu de la composition selon l'invention. Ainsi, par exemple, lors d'un passage d'eau très chaude, lorsque la composition ne comprend pratiquement plus de paraffine, la cire permet de poursuivre le processus de libération de l'agent actif.

D'autre part, il découle de ce qui précède que dans la plupart des applications envisagées, notamment les applications domestiques, le constituant soluble doit de préférence être choisi pour être soluble à une température de l'ordre de 20° à 60°C.

Le constituant soluble peut être choisi parmi les sels d'acides gras, les sels alcalino-terreux d'acides gras saturés, les sels alcalins ou alcalino-terreux d'acides gras insaturés, les chlorures d'alcalin ou d'alcalino-terreux, et leurs mélanges.

Les sels d'acides gras, communément appelés "savons", peuvent être choisis parmi les sels de sodium de l'acide stéarique, de l'acide palmitique, de l'acide myristique, de l'acide laurique, de l'acide oléique, de l'acide linoléique, ou les sels de sodium d'acide gras à base de suif et de palmiste.

Ayant une solubilité variable fonction de la température du milieu dans lequel ils sont incorporés, les sels alcalins d'acides gras peuvent être utilisés pour obtenir un effet rémanent dans la diffusion progressive de l'agent actif dans un intervalle de température allant de 20° à 60°C.

Enfin, les composés solubles tels que certains chlorures d'alcalin ou d'alcalino-terreux peuvent être utilisés dans la composition de l'invention pour des applications à usage alimentaire, par exemple dans des réservoirs d'eau potable.

L'ajout à la composition selon l'invention d'un élément se dilatant et/ou se gonflant en présence d'eau, comme de l'argile ou des fibres de cellulose, est un aspect optionnel mais avantageux de l'invention. En effet, la dilatation ou le gonflement de cet élément provoque la fissuration progressive de la composition et permet de transformer des alvéoles en cavernes. L'élément dilatant et/ou gonflant joue ainsi le double rôle de structurant et de fissurateur. Ce mécanisme de libération de l'agent actif par fissuration se cumule en synergie avec le mécanisme de fusion de la paraffine et/ou de la cire. Ce mécanisme de fissuration peut également constituer une alternative à la fusion de la paraffine et/ou de la cire quand la composition selon l'invention est soumise à une température restant en dessous du seuil de fusion.

On utilisera par exemple une argile comme la bentonite, le kaolin, ou un mélange de ces deux éléments. L'élasticité et la rigidité de la composition support selon l'invention sont fonction de la nature et de la quantité en argile.

Comme cela apparaîtra clairement à l'homme de l'art, le changement des proportions de chaque constituant de la composition selon l'invention permet de faire varier les valeurs de leurs paramètres physico-chimiques respectifs, tels que leur solubilité, leur température de fusion, ainsi que la variation de la rigidité de la composition selon l'invention et sa vitesse de fissuration.

Par exemple, en augmentant la proportion en paraffine et/ou cire, et en effectuant un choix précis sur une paraffine, une cire ou un mélange paraffine/cire, la composition libère l'agent actif dans un intervalle de température bien déterminé.

Par ailleurs, en augmentant la proportion en composé soluble, tel qu'un sel alcalin d'acide gras, la composition selon l'invention libère plus facilement l'agent actif à faible température (20°-30°C).

Enfin, la proportion de l'élément se dilatant et/ou gonflant en présence d'eau a une incidence sur la flexibilité de la composition selon l'invention et sur son aptitude à se dégrader, indépendamment de l'effet de la chaleur.

A titre d'exemple numérique, l'agent actif peut représenter 10 à 30% du poids total de la composition.

La paraffine ou la cire ou le mélange paraffine/cire peuvent représenter 30% à 60%, de préférence 22% à 54%, du poids total de la composition.

Lorsque le constituant soluble est un sel alcalin d'acide gras, il peut représenter 22% à 45% du poids total de la composition. Lorsqu'il est réalisé à partir de chlorure d'alcalin ou d'alcalino-terreux, il peut représenter 15% à 30% du poids total de la composition.

L'agent se dilatant et/ou gonflant en présence d'eau peut représenter (à sec) 10% à 30% du poids total de la composition.

Pour fixer les idées, le tableau I ci-après donne à titre non limitatif des exemples de réalisation de compositions selon l'invention, les quantités étant exprimées en pourcentage pondéral.

**Tableau I**

| composants | Plages de températures de fusion en °C | EX1 % | EX2 % | EX3 % | EX4 % | EX5 % |
|---|---|---|---|---|---|---|
| Paraffine ou cire de pétrole | 46-50 50-54 (≤70) | 27 | 36 | 54 | 58 | |
| cire de polyéthylène | jusqu'à 130 | | | | | 50 |
| A.G.S. 1,2 ou 3 | 20 à 60 par tranches de 15 à 30°C | 45 | 40 | 27 | | |
| Bentonite | | 18 | 14 | 9 | 15 | 10 |
| Sel soluble | | | | | 25 | 38 |
| Micro-organisme | | 10 | 10 | 10 | | |
| colorant, etc.. | | | | | 2 | 2 |
| TOTAL | | 100 | 100 | 100 | 100 | 100 |

A.G.S.1 = sel d'acide gras saturé de très faible solubilité (type myristate de sodium ou palmate de sodium),
A.G.S.2 = sel d'acide gras saturé de moyenne solubilité (type suif - coprah 80/20),
A.G.S.3 = sel d'acide gras saturé de faible solubilité (type stéarate ou palmate de sodium).

### Exemple 1:

La composition selon cet exemple présente une rémanence et une capacité de libération de l'agent actif qui sont fonctions uniquement, ou presque, des caractéristiques de solubilité de l'acide gras saturé utilisé.

La structure de la composition est fragile et se détruit même sans être en contact avec un liquide chaud.

Elle est parfaitement bien adaptée à une utilisation en libération progressive dans des fosses septiques.

La structure se détruit dans ce cas essentiellement par l'effet de gonflement de l'argile qui entraîne un éclatement de la paraffine.

### Exemple 2:

Dans ce cas, la composition présente des caractéristiques de libération similaires à celles de l'exemple 1, mais en présentant une structure plus résistante aux passages d'eau froide ou d'eau chaude. Elle présente par conséquent une meilleure rémanence pour une utilisation dans des siphons.

A la fin de son utilisation, la composition se détruit sous l'effet combiné de la chaleur du liquide, et du gonflement de l'argile. Cette dernière fragmente la paraffine non fondue.

### Exemple 3:

Dans cette composition, la libération de l'agent actif est fonction de la fréquence de passage des flux de liquide chaud. Dans ce cas, la fusion de la paraffine transforme les alvéoles fermées en cavernes ouvertes vers le milieu extérieur. Cette ouverture permet la mise en contact du milieu extérieur avec l'acide gras saturé. En se solubilisant, l'acide gras saturé libère l'agent actif présent dans sa structure.

La composition se détruit après plusieurs passages de flux de liquide ayant une température supérieure ou égale à 55°C.

L'effet d'éclatement lié à la présence de l'argile existe, mais est inférieur à celui de l'exemple 2.

### Exemple 4:

Dans cette composition, la paraffine et l'argile servent de structure autoporteuse. La libération de l'agent actif soluble se produit sous l'effet de la dilatation de l'argile. Ceci crée de toutes petites cavernes dans la structure de la composition, ce qui permet une pénétration facile et rapide de l'eau.

Cette composition peut être utilisée pour la libération progressive de l'agent actif sous l'effet de flux successifs d'eau froide, tels que dans des cuvettes ou des chasses d'eau de cabinet d'aisance.

### Exemple 5:

Cette composition libère l'agent actif de la même façon que dans l'exemple 4, mais sous l'effet de liquides aqueux ayant une température supérieure ou égale à 50°C.

En pratique, la composition selon l'invention se présente sous une forme géométrique compacte et rigide, de préférence sous forme d'un bâtonnet ayant par exemple un diamètre d'environ 5 mm et une longueur d'environ 10 cm. Le bâtonnet peut être glissé dans un siphon par l'intermédiaire de la bonde d'un évier, et y rester jusqu'à sa destruction totale.

Le choix du procédé de fabrication de la composition selon l'invention délimite les bornes supérieures et inférieures des proportions de chaque constituant.

Selon un mode de réalisation préféré, le procédé de fabrication de la composition selon l'invention comprend tout d'abord une étape consistant à préparer le composant soluble, en y incorporant l'agent actif, à moins que le composant soluble soit lui-même l'agent actif que l'on souhaite libérer progressivement. Au cours de cette étape, on y incorpore de façon optionnelle mais avantageuse l'élément se dilatant et/ou gonflant en présence d'eau, comme de l'argile et/ou des fibres de cellulose.

Puis, on mélange le composant soluble avec une paraffine ou une cire, ou un mélange paraffine/cire.

Cette opération est réalisée dans un mélangeur dont l'action doit être rapide afin de rendre l'ensemble parfaitement homogène et éviter la formation de blocs de paraffine ou de cire. Les constituants sont de préférence incorporés très rapidement dans le mélangeur. Un mélangeur de type "à socs de charrues" est bien adapté aux produits colmatants.

Le mélange peut être ensuite déversé dans une trémie doseuse, ayant une contenance supérieure à celle du mélangeur, munie d'un tapis d'extraction à vitesse variable permettant de régler le débit. Il est préférable que le système de dosage évite au maximum les effets de frottement, tant sur les parois de la trémie du fait de son faible coefficient d'écoulement, que sur l'outil d'extraction du fait de la tendance naturelle du mélange à colmater.

En aval du doseur, on peut prévoir une "boudineuse" constituée d'une vis d'Archimède tournant dans un fourreau à une vitesse de l'ordre 10 à 15 tours/min. L'extrémité de la vis est fermée par un embout muni d'une filière ayant plusieurs orifices d'un diamètre chacun d'environ 5 mm.

Au cours du passage dans la vis, la masse s'échauffe, forme une pâte et passe au travers des orifices de la filière pour former de longs filaments. Ces derniers sont ensuite récupérés en aval sur un tapis transporteur où ils commencent à durcir en se refroidissant avant d'arriver sous une "guillotine" qui les sectionne sous forme de bâtonnets de longueur variable.

La température de travail doit être surveillée, éventuellement régulée. Elle ne doit ni atteindre ni dépasser la température de fusion de la paraffine et/ou de la cire. La température de travail doit simplement se rapprocher de la température de fusion du mélange de façon à ce que celui-ci atteigne un état pâteux.

Ceci peut être obtenu de façon simple en faisant varier la vitesse de rotation de la vis, et en équipant la "boudineuse" d'un dispositif de refroidissement.

Les bâtonnets ainsi formés sont ensuite ventilés de façon à ce qu'ils atteignent leur température de rigidité avant d'être conditionnés. Pour certaines applications, des tiges métalliques peuvent être introduites dans les bâtonnets. Les tiges sont ensuite recourbées pour former des crochets.

Bien entendu, la composition selon l'invention est susceptible de se présenter sous diverses autres formes.

## Revendications

1. Composition support d'au moins un agent actif à libérer progressivement en présence d'eau, caractérisée en ce qu'elle comprend :
- au moins une paraffine, ou une cire, ou un mélange paraffine/cire, et
- au moins un constituant soluble dans l'eau à une température choisie en fonction des conditions prévues d'utilisation de la composition et de la durée de rétention souhaitée de l'agent actif,
la paraffine et/ou la cire formant des alvéoles dans lesquelles se trouve le constituant soluble.

2. Composition selon la revendication 1, comprenant en outre au moins un élément se dilatant et/ou gonflant en présence d'eau.

3. Composition selon la revendication 2, dans laquelle l'élément dilatant et/ou gonflant est choisi parmi l'argile, les fibres de cellulose, et leurs mélanges.

4. Composition selon l'une des revendications 2 et 3, dans laquelle l'élément dilatant et/ou gonflant comprend une argile choisie parmi la bentonite, le kaolin, ou un mélange de ces deux éléments.

5. Composition selon l'une des revendications 1 à 4, dans laquelle l'agent actif est mélangé au constituant soluble.

6. Composition selon l'une des revendications 1 à 4, dans laquelle l'agent actif est formé en tout ou en partie par le constituant soluble.

7. Composition selon l'une des revendications 1 à 6, dans laquelle l'agent actif est choisi parmi les produits intervenant dans la bio épuration des eaux, notamment les micro-organismes, enzymes, diastases, et/ou parmi les bactéricides, antifongiques, désinfectants, les parfums, les dégraissants, les colorants et leurs mélanges.

8. Composition selon l'une des revendications 1 à 7, dans laquelle le constituant soluble est choisi parmi les sels d'acides gras, les sels alcalins ou alcalino-terreux d'acides gras saturés, les sels alcalins ou alcalino-terreux d'acides gras insaturés, les chlorures d'alcalin ou d'alcalino-terreux, et leurs mélanges.

9. Composition selon l'une des revendications précédentes, dans laquelle l'agent actif est présent en une quantité représentant 10 à 30% du poids total de la composition.

10. Composition selon l'une des revendications précédentes dans laquelle, pour une gamme de températures de travail déterminée, la paraffine ou la cire est choisie pour présenter une température de fusion se situant dans les valeurs hautes de la gamme de températures de travail et le constituant soluble est choisi pour présenter une température optimale de solubilisation se situant dans les valeurs basses de la gamme de températures.

11. Composition selon l'une des revendications précédentes, caractérisée en ce qu'elle se présente sous la forme d'un bâtonnet.

12. Procédé de fabrication d'une composition support d'au moins un agent actif à libérer progressivement en présence d'eau, caractérisé en ce qu'il comprend les étapes consistant à :
- préparer un constituant soluble dans l'eau, comprenant l'agent actif à libérer et/ou formant lui-même l'agent actif,
- mélanger avec le constituant soluble au moins une paraffine, ou une cire, ou un mélange cire/paraffine,
de manière à former un mélange comportant des alvéoles de paraffine et/ou de cire dans lesquelles se trouve le constituant soluble.

13. Procédé selon la revendication 12, dans lequel l'étape de préparation du constituant soluble comprend une étape d'incorporation dans le constituant soluble d'un élément pouvant se dilater et/ou gonfler en présence d'eau.
